Europäisches Patentamt

European Patent Office

Office européen des brevets

(11) Veröffentlichungsnummer: **0 285 813**
**A1**

## EUROPÄISCHE PATENTANMELDUNG

(21) Anmeldenummer: 88103322.9

(22) Anmeldetag: 04.03.88

(30) Priorität: 07.03.87 DE 3707348

(43) Veröffentlichungstag der Anmeldung:
12.10.88 Patentblatt 88/41

(84) Benannte Vertragsstaaten:
FR GB IT NL

(51) Int. Cl.⁴ **F16L 37/12**

(71) Anmelder: SCHWELM ANLAGEN +
APPARATE GMBH
Loher Strasse 1
D-5830 Schwelm(DE)

(72) Erfinder: Riché, Robert
Sendentaler Str. 22
D-4006 Erkrath(DE)

(74) Vertreter: Dipl.-Ing. H. Marsch Dipl.-Ing. K.
Sparing Dipl.-Phys.Dr. W.H. Röhl
Patentanwälte
Rethelstrasse 123
D-4000 Düsseldorf(DE)

(54) **Kupplung.**

(57) Die Erfindung betrifft eine Kupplung für Rohr-
und Schlauchleitungen mit Verschlußleitung (1),
deren Klammerhebel (14) am Umfang einer Anschlußleitung (3) angelenkt, parallel zur Achse der
Anschlußleitung (3) verstellbar sind und Klammerköpfe (13) tragen, die über die Klammerhebel
(14) in kraftschlüssigen Eingriff mit dem Flansch (6)
einer anzukuppelnden Rohrleitung (7) schwenkbar
sind. Um ein einfaches und sicheres Kuppeln der
Rohr-und Schlauchleitungen zu erreichen, ist vorgesehen, daß die Klammerhebel (14) über einen
druckmittelbeaufschlagbaren und einer Feder (21)
entgegengerichtet wirkenden Zylinder (17)
verlängerbar sind.

Fig. 1

# Kupplung

Die Erfindung betrifft eine Kupplung für Rohr- und Schlauchleitungen nach dem Oberbegriff des Anspruchs 1.

Derartige Kupplungen werden zum Verbinden von Rohr-und Schlauchleitungen für das Beladen und Löschen von Tankschiffen benötigt. Um eine fluiddichte Kupplung der Rohr-und Schlauchleitungen zu erreichen, müßen die Verschlußklammern die Flansche der zu verbindenden Leitungen mit einem ausreichenden Druck aneinanderpressen. Hierzu werden die Verschlußklammern, die am Umfang einer Anschlußleitung angelenkt und parallel zur Achse der Anschlußleitung verstellbar sind, mittels eines Antriebssystems in einen kraftschlüssigen Eingriff mit dem Flansch einer anzukuppelnden Rohrleitung bewegt. Weisen allerdings die ankuppelbaren Rohr-und Schlauchleitungen einen großen Durchmesser auf, oder werden durch diese Leitungen Fluide mit einem hohen Innendruck befördert, so haben die Verschlußklammern einen hohen Anpreßdruck auf den anzuschließenden Flansch zu übertragen, der nur noch schwierig zu erreichen ist.

Eine derartige Verschlußklammer für die Kupplung von Rohrleitungen ist aus der US-PS 3,865,409 bekannt, die zur Herstellung eines kraftschlüssigen Eingriffs mit dem Flansch einer anzukuppelnden Rohrleitung axial und radial bewegbar angeordnet ist. Dabei umfaßt die Verschlußklammer einen Klammerarm, der gesteuert über einen fluidbetätigbaren Arbeitszylinder mit zwischenliegenden Nockenscheiben verfahrbar ist. Die Anordnung erfolgt derart, daß bei Betätigung des Arbeitszylinders zum Ankuppeln des Flansches die Bewegung des Arbeitszylinders zunächst direkt auf den Klammerarm übertragen wird, während eine weitere Bewegung des Arbeitszylinders über die Nockenscheiben auf den Klammerarm übertragen wird, um so den Vorschub zu reduzieren und den verfügbaren Druck auf den Klammerarm zu erhöhen. Eine derartige Verschlußklammer ist nicht nur konstruktiv aufwendig, sondern benötigt auch eine hohe Kraft des Antriebssystems für ein dichtes Ankuppeln einer Rohrleitung.

Aufgabe der Erfindung ist es daher, eine Kupplung nach dem Oberbegriff des Anspruchs 1 zu - schaffen, die ein einfaches und sicheres Kuppeln der Rohr-und Schlauchleitungen erlaubt.

Diese Aufgabe wird entsprechend dem kennzeichnenden Teil des Anspruchs 1 gelöst.

Hierdurch wird erreicht, daß die Kupplung Verschlußklammern aufweist, die eine höhere Schließkraft besitzen und damit eine bessere Dichtigkeit der Kupplung bewirken. Weiterhin wird die zur Herstellung des kraftschlüssigen Eingriffs benötigte Kraft des Antriebssystems verringert, da der auf die Flansche übertragene Anpressdruck nicht mehr allein vom Antriebssystem geliefert werden muß. Dies hat zur Folge, daß das Kuppeln mit größerer Geschwindigkeit erfolgen kann. Auch die von der Seeluft hervorgerufenen Unebenheiten der auf den Schiffen installierten Flansche können ohne Dichtigkeitsverluste beim Ankuppeln ausgeglichen und verschiedene Schiffsflanscharten mit unterschiedlichen Nennweiten verbunden werden.

Weitere Ausgestaltungen der Erfindung sind den Unteransprüchen und der nachfolgenden Beschreibung zu entnehmen.

Die Erfindung wird nachstehend anhand der in den beigefügten Abbildungen dargestellten Ausführunsbeispiele näher erläutert.

Fig. 1 zeigt teilweise geschnitten eine Seitenansicht eines ersten Ausführungsbeispiels der Kupplung.

Fig. 2 zeigt teilweise geschnitten eine Seitenansicht des ersten Ausführungsbeispiels der Kupplung mit Handantrieb.

Fig. 3 zeigt teilweise geschnitten eine Seitenansicht eines zweiten Ausführungsbeispiels der Kupplung.

Fig. 4 zeigt teilweise geschnitten eine Seitenansicht des ersten Ausführungsbeispiels mit verschiedenen Betätigungseinrichtung.

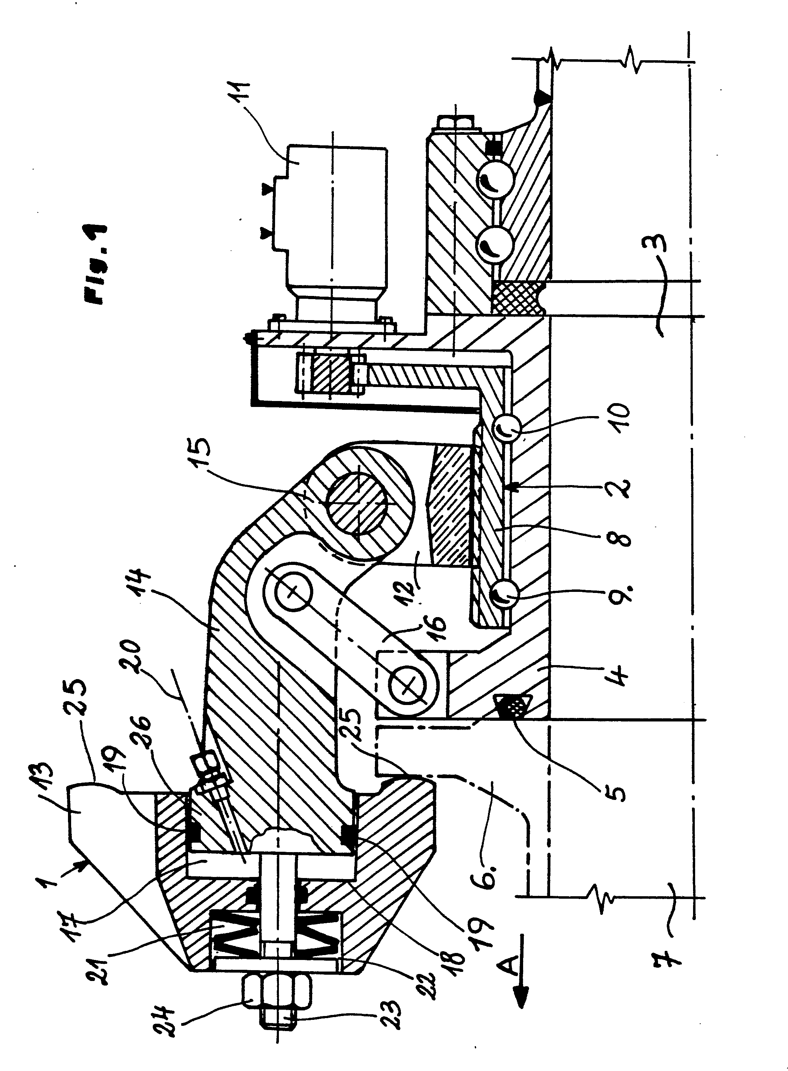

Fig. 1 zeigt eine Kupplung für Rohr-und Schlauchleitungen mit einer dargestellten Verschlußklammer 1, die über ein kugelgelagertes Schraubengetriebe 2 an einer Anschlußleitung 3 angelenkt ist. Diese Anschlußleitung 3 besitzt einen Flansch 4, der über eine Dichtung 5 mit einem Flansch 6 einer anzukuppelnden Rohr-oder Schlauchleitung 7 verbindbar ist.

Das Schraubengetriebe 2 umfaßt eine Gewindespindel 8, die über axial zueinander angeordnete Kugelreihen 9 und 10 um die Anschlußleitung 3 gelagert und mit einem Antrieb 11 zur Drehung der Gewindespindel 8 verbindbar ist. Mit der Gewindespindel 8 steht ein Antriebsglied 12 in Eingriff, das durch die Spindelbewegung parallel zur Achse der Anschlußleitung 3 verschiebbar ist. Zur Betätigung dieses Antriebssystems sind hydraulische Motoren, Handpumpen usw. verwendbar. Die Verschlußklammer 1, die einen Klammerkopf 13 und einen Klammerhebel 14 umfaßt, ist mit einem Ende 15 an dem Antriebsglied 12 angelenkt. Sofern mehrere Verschlußklammern 1 zur Ankupplung einer Rohr-oder Schlauchleitung 7 eingesetzt werden, können mehrere Antriebsglieder 12 mit der Gewindespindel 8 in Eingriff gebracht werden. Wie in Fig. 1 dargestellt, ist ein Hebel 16 vorgesehen, der einerseits an dem Flansch 4 und andererseits an dem Klammeerhebel 14 angelenkt ist. Durch diese Anlenkung führt der Klammerhebel 14 bei Betätigung der Gewindespindel 8 eine Schwenkbewegung aus, die den Klammerkopf 13 in oder aus kraftschlüssigen Eingriff mit der anzukuppelnden Rohr-oder Schlauchleitung 7 bewegt.

Der Klammerhebel 14 trägt an seinem freien Ende 26 den Klammerkopf 13. Der Klammerhebel 14 und der Klammerkopf 13 sind dabei über einen Zylinder 17 miteinander verbunden. Der Zylinder 17 wird von einer Ausnehmung 18 in dem Klammerkopf 13 gebildet, die eine gleitbewegliche axiale Verschiebung des Klammerkopfes 13 gegenüber dem Klammerhebel 14 erlaubt, wobei das freie Ende 26 des Klammerhebels 14 als Kolbenstange über eine Dichtung 19 in dem Zylinder 17 angeordnet ist. In den Zylinder 17 ragt ein verschließbarer Ein-bzw. Auslaßstutzen 20, über den der Zylinder 17 mit einem Druckmedium beaufschlagbar ist. Durch die Druckmittelbeaufschlagung des Zylinders 17 wird der Klammerkopf 13 in eine Richtung A axial verschoben, wobei zur Begrenzung der axialen Verschiebung des Klammerkopfes 13 von dem freien Ende 26 in Richtung A nicht dargestellte Begrenzungsmittel vorgesehen sein können. An der Spitze des Klammerkopfes 13 ist eine Feder 21 angeordnet, die den Klammerkopf 13 gegen das freie Ende 26 des Klammerhebels 14 drückt. Gemäß Fig. 1 ist die Feder 21 in einer Ausnehmung 22 um einen Dorn 23, der sich von dem freien Ende 26 durch den Zylinder 17 erstreckt, und auf dem der Klammerkopf 13 abgedichtet gelagert ist, angeordnet. Die Feder 21 ist hier vorzugsweise als Tellerfeder ausgebildet und kann durch eine Arretierungseinrichtung 24 an dem Dorn 23 derart zusammengepreßt werden, daß sie mit einer wählbaren Federkraft den Klammerkopf 13 gegen den Klammerhebel 14 vorspannt. Diese gegen den Klammerhebel 14 wirkende Federkraft wirkt auch gegen den Flansch 4 der Anschlußleitung 3, wenn sich die Verschlußklammer 1 in der kraftschlüssigen Eingriffsposition befindet. Die Feder 21 wird vorzugsweise so gewählt und vorgespannt, daß die Federkraft größer ist als die axiale Kraft des Innendrucks und die äußeren Kräfte der Produktleitung.

Die Verschlußklammer 1 ist demnach so ausgebildet, daß der Klammerhebel 14 durch Beaufschlagung des Zylinders mit einem Druckmedium durch Verschiebung des Klammerkopfes 13 entgegen der Federkraft der Feder 21 verlängerbar ist. In der kraftschlüssigen Eingriffsposition erfolgt die Verlängerung des Klammerhebels 14 in Richtung A und damit entgegen der Richtung des Flansches 4, während die Kraft der Feder 21 entgegen der Richtung A und damit in Richtung des Flansches 4 der Anschlußleitung 3 wirkt. Zur Erzeugung einer derart gerichteten Federkraft sind auch elastomere Elemente und andere Anordnungen der Feder 21 im oder am Klammerkopf 13 möglich, beispielsweise könnte die Feder in dem Zylinder 17 und das freie Ende 26 umgebend angeordnet sein, wobei die Feder sich zwischen Zylinderausgang und Kopfteil des Endteils 26 abstützt.

Zur Beaufschlagung des Zylinders 17 mit einem Druckmedium sind übliche Druckbeaufschlagungseinrichtungen verwendbar.

Für den kraftschlüssigen Eingriff des Klammerkopfes 13 mit dem Flansch 6 der anzukuppelnden Rohr-oder Schlauchleitung 7 weist der Klammerkopf 13 zusätzliche Nocken 25 auf, so daß die Verschlußklammern 1 für verschiedene Schiffsflanschnormweiten geeignet sind.

Fig. 1 zeigt die Verschlußklammer 1 in einer Verschlußstellung, bei der der Hebel 14 mit dem Klammerkopf 13 zur Erzielung des kraftschlüssigen Eingriffs mit dem Flansch 6 der anzukuppelnden Rohr-oder Schlauchleitung 7 geschwenkt ist. Der von dem Klammerkopf 13 auf den anzukuppelnden Flansch 6 übertragene Anpreßdruck resultiert einerseits aus der Verstellung des Antriebsglieds 12 auf der Gewindespindel 8 und damit Verstellung der Verschlußklammer 1 entgegen der Richtung A und andererseits aus der Federkraft, die die Feder 21 auf den Klammerkopf 13 ausübt. Die von der Feder 21 ausgehende Kraftkomponente kann jedoch nur dann in Richtung des Flansches 4 (entgegen Richtung A) voll wirken, wenn der Zylinder 17 nicht mit einem Druckmittel beaufschlagt ist, also der Klammerhebel 14 nicht entgegen der Federkraft verlängert ist. Bei der in Fig. 1 dargestellten Verschlußstellung der Kupplung ist der Zylinder 17 noch teilweise druckbeaufschlagt, so daß der Klammerhebel 14 noch teilweise verlängert ist und damit die von der Feder 21 ausgehende Kraftkomponente nicht voll als Anpreßdruck ·auf den Flansch 6 wirken kann. Erst wenn der Zylinder 17 nicht mehr druckmittelbeaufschlagt ist und das freie Ende 26 ganz von der Ausnehmung 18 aufgenommen wird, steht der Federkraft keine Kraftkomponente des Zylinders 7 entgegen. Der federvorgespannte Klammerkopf 13 liefert nunmehr einen Anpreßdruck in Richtung des Flansches 4 der Anschlußleitung 3 (entgegen Richtung A) und ermöglicht einen kraftschlüssigen Eingriff mit der anzukupplenden Rohr-oder Schlauchleitung 7 bei geringer Krafteinwirkung durch das Antriebssystem. Dabei kann für eine dichte Ankupplung vorgesehen sein, daß mehrere der dargestellten Klammern 1 in einem solchen kraftschlüssigen Eingriff gebracht werden. Die Betätigung der Verschlußklammern 1 erfolgt dann vorzugsweise gleichzeitig.

·Zum Öffnen der in Fig. 1 dargestellten Verschlußklammer(n) 1 und Abkuppeln der Leitung 7 wird zunächst jeder Zylinder 17 mit einem Druckmedium beaufschlagt, wodurch der jeweilige Klammerkopf 13 sich entgegen der Federkraft in Richtung A bewegt, die Feder 21 zusammengedrückt wird und der kraftschlüssige Eingriff mit dem Flansch 6 sich lockert bzw. bei ausreichender Druckbeaufschlagung des Zylinders 17 gelöst wird. Durch die anschließende Betätigung der Gewindespindel 8 wird das jeweilige Antriebsglied 12 mit dem daran jeweils angelenkten Klammerhebel 14 aus dieser gelösten Position herausgeschwenkt, damit die abzukuppelnde Rohr-oder Schlauchleitung 7 ohne Behinderung durch die Verschlußklammer(n) 1 aus der Kupplungsstellung entfernt werden kann.

Wird die Kupplung anschließend zu keiner neuen Kupplung einer Rohr-oder Schlauchleitung 7 benötigt, kann das Druckmedium aus jedem Zylinder 17 wieder entfernt werden und die Verschlußklammer(n) 1 in einem Ruhezustand verbleiben, bei dem die Feder 21 den Klammerkopf 13 gegen das freie Ende 26 vorspannt.

Ist eine neue Ankupplung erwünscht, so werden die Zylinder der jeweiligen Verschlußklammer(n) 1 wieder mit einem Druckmedium beaufschlagt, sofern eine solche Beaufschlagung nicht bereits aufgrund einer vorherigen Abkupplung existiert. Daraufhin werden die Klammerhebel 14 in die Eingriffsposition mit dem anzuschließenden Flansch 6 geschwenkt und die Druckbeaufschlagung der jeweiligen Zylinder 17 verringert oder beseitigt, so daß die Federkraft die Klammerköpfe 13 entgegen der Richtung A vorspannt. Der von dem Antriebssystem 2, 11 und den Klammerköpfen 13 auf den anzukuppelnden Flansch 6 hervorgerufene Anspreßdruck bewirkt ein dichtes Kuppeln bei einer minimalen Kraft des Antriebssystems 2, 11. Eine lediglich manuelle Betätigung des Antriebssystems 2, 11 neben einer möglichen hydraulischen, pneumatischen oder elektrischen wird dadurch möglich.

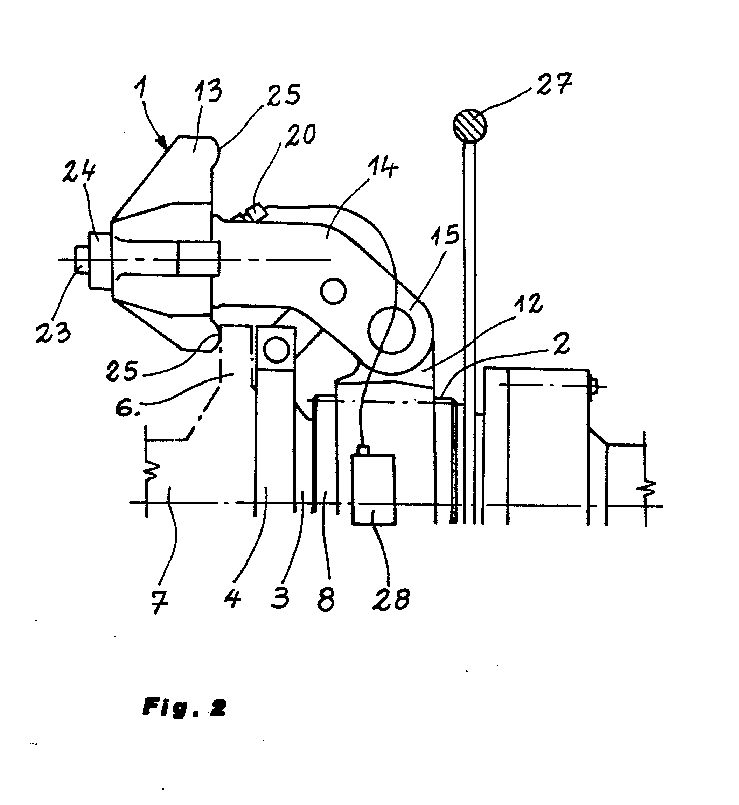

Fig. 2 zeigt eine Ausführungsform des in der Fig. 1 dargestellten ersten Ausführungsbeispiels, bei der als Druckmittelbeaufschlagungseinrichtung eine Handpumpe 28 und als Antrieb 11 ein Handrad 27 vorgesehen ist.

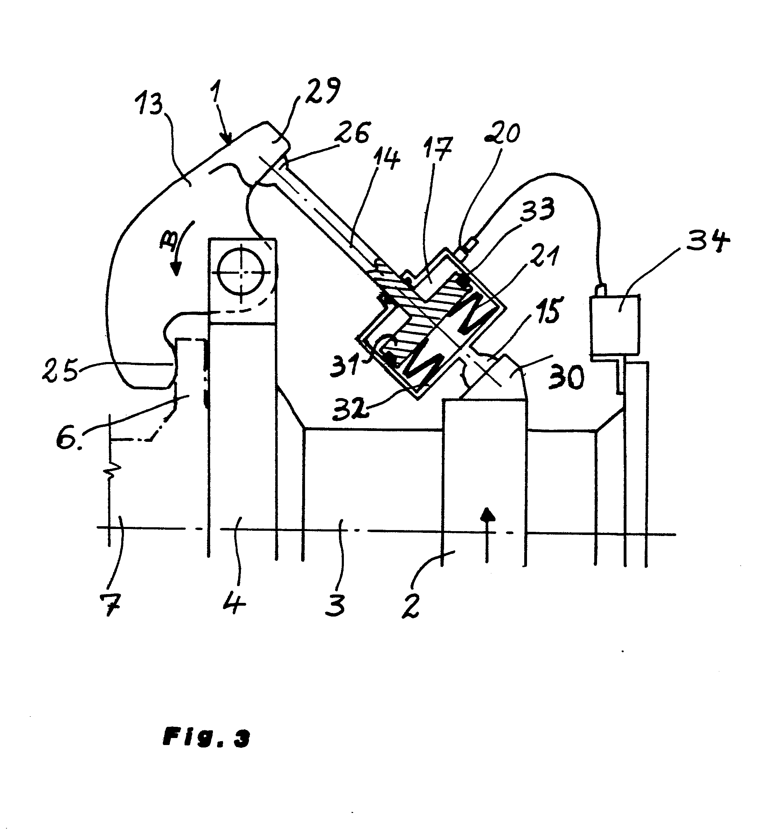

Fig. 3 zeigt ein zweites Ausführungsbeispiel der Kupplung mit einer dargestellten Verschlußklammer 1 in einer Verschlußstellung zur Erzielung eines kraftschlüssigen Eingriffs. Der Klammerkopf 13 der dargestellten Verschlußklammer 1 ist an dem Flansch 4 der Anschlußleitung 3 angelenkt. Über ein Kugelgelenk 29 ist dieser Klammerkopf 13 mit dem Ende 26 des Klammerhebels 14 verbunden. Das an den Anschlußleitung 3 angelenkte Ende 15 des Klammerhebels 14 endet in einem weiteren Kugel gelenk 30: Zwischen den beiden Enden 15, 26 des Klammerhebels 14 ist ein Zylinder 17 angeordnet, der einen teil des Klammerhebels 14 als Kolbenstange aufnimmt, wobei die Kolbenstange in dem Zylinder 17 stempelartig endet. Die Feder 21 stützt sich einerseits an dem stempelartigen Ende 31 und andererseits an einer Bodenfläche 32 des Zylinders 17 ab. Die derart angeordnete Feder 21 besitzt eine Federkraft, die eine Verlängerung des Klammerhebels 14 bewirkt und damit den Klammerkopf 13 um einen Winkel in Richtung B dreht. Um das stempelartige Ende 31 ist in dem Zylinder 17 eine Dichtung 33 angeordnet. Der verschließbare Ein-und Auslaßstutzen 20 ist mit einer Druckmittelbeaufschlagungseinrichtung 34 verbunden und erlaubt eine Beaufschlagung des Zylinders 17 mit einem Druckmedeium oberhalb des stempelartigen Endes 31 des Klammerhebels 14. Die auf das stempelartige Ende 31 des Klammerhebels 14 wirkende Kraftkomponente bei Beaufschlagung des Zylinders 17 mit einem Druckmedium ist auch hier entgegen der Federkraft gerichtet.

Zur Bewirkung eines kraftschlüssigen Eingriffs mit dem Flansch 6 der anzukuppelnden Rohr-oder Schlauchleitung 7 wird der Zylinder 17 zunächst mit dem Druckmedium beaufschlagt und der Klammerkopf 13 mittels des Antriebssystems 2 in die Verschlußstellung geschwenkt. Sobald diese Position erreicht ist, wird das Druckmedium aus dem Zylinder 17 abgelassen, so daß die Federkraft der Feder 21 nunmehr den Klammerkopf 13 verlängert, wodurch der Anpreßdruck über die Nocken 25 auf den anzukuppelnden Flansch 6 erhöht wird. Der von der Verschlußklammer 1 bewirkte Anpreßdruck in Richtung B ermöglicht, die Kraftkomponente des Antriebssystems 2 kleinzuhalten. Ein Handbetrieb zum Ankuppeln der Rohr-oder Schlauchleitung 7 ist damit einsetzbar.

Zum Lösen des kraftschlüssigen Eingriffs wird entsprechend der Beschreibung zu Fig. 1 der Zylinder 17 zunächst wieder druckmittelbeaufschlagt. Dies hat zur Folge, daß der Klammerkopf 13 sich entgegen der Richtung B dreht und damit den kraftschlüssigen Eingriff lockert. Das Herausschwenken des Klammerkopfes 13 aus der Verschlußstellung erfolgt dann über das Antriebssystem 2.

Je nach Erforderlichkeit können wiederum mehrere der dargestellten Verschlußklammern 1 an der Anschlußleitung 3 angelenkt und in den kraftschlüssigen Eingriff bringbar sein.

Auch bei anderen Ausbildungen der Klammerköfte 13 und deren Anlenkung ist durch die Verlängerung des Klammerhebels 14 mittels eines druckmittelbeaufschlagbaren und dem Federelement 21 entgegenwirkenden Zylinders 17 eine einfache und sichere Kupplung der Rohrleitung oder Schlauchleitung 7 möglich.

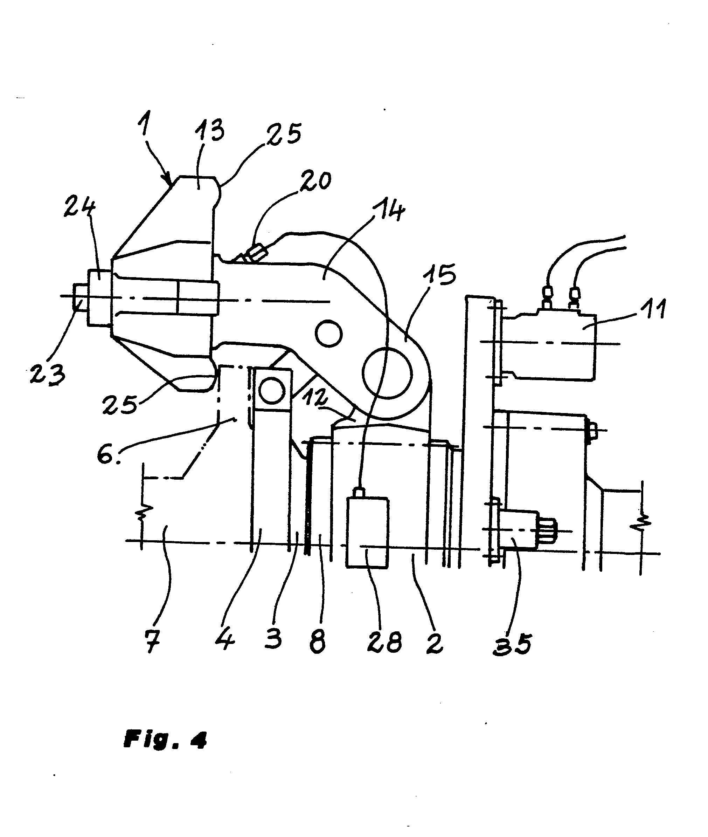

Fig. 4 zeigt das erste Ausführungsbeispiel gemäß den Fig. 1 und 2, bei dem als Druckmittelbeaufschlagungseinrichtung die Handpumpe 28 und zum Antrieb der Gewindespindel 8 hydraulische Motoren 11 und eine manuelle Betätigungseinrichtung 35, als hilfssystem bei Ausfall der hydraulischen Motoren 11, vorgesehen sind.

## Ansprüche

1. Kupplung für Rohr-und Schlauchleitungen mit Verschlußklammern (1), deren Klammerhebel (14) am Umfang einer Anschlußleitung (3) angelenkt, parallel zur Achse der Anschlußleitung (3) verstellbar sind, und Klammerköpfe (13) tragen, die über die Klammerhebel (14) in kraftschlüssigen Eingriff mit dem Flansch (6) einer anzukuppelnden Rohrleitung (7) schwenkbar sind, dadurch gekennzeichnet, daß die Klammerhebel (14) über einen druckmittelbeaufschlagbaren und einer Feder (21) entgegengerichtet wirkenden Zylinder (17) verlängerbar sind.

2. Kupplung nach Anspruch 1, dadurch gekennzeichnet, daß jeder Klammerhebel (14) zusätzlich am Flansch (4) der Anschlußleitung (3) über einen Hebel (16) angelenkt ist.

3. Kupplung nach Anspruch 1 oder 2, dadurch gekennzeichnet, daß der Zylinder (17) gebildet wird durch eine erste Ausnehmung (18) im Klammerkofp (13), die das freie Ende (26) des Klammerhebels (14) gleitbeweglich und abgedichtet gegenüber dem Klammerhebel (14) geführt aufnimmt.

4. Kupplung nach Anspruch 1, dadurch gekennzeichnet, daß die Klammerköpfe (13) drehbar um eine Achse senkrecht zur Leitungsachse an dem Flansch (4) der Anschlußleitung (3) befestigt und die Klammerhebel (14) mit ihrem angelenkten Ende (15) über jeweils ein entlang der Anschlußleitung (3) verschiebbarem Kugelgelenk (30) angelenkt sind.

5. Kupplung nach Anspruch 4, dadurch gekennzeichnet, daß der Zylinder (17) Teil des Klammerhebels (14) ist, wobei der Teil des Klammerhebels (14) zwischen zugehörigem Klammerkopf (13) und Zylinder (17) als Kolbenstange ausgebildet ist.

6. Kupplung nach Anspruch 4 oder 5, dadurch gekennzeichnet, daß der Klammerhebel (14) in dem Zylinder (17) ein stempelartig ausgebildetes und gegenüber der Zylinderwandung abgedichtetes Ende (31) aufweist.

7. Kupplung nach einem der Ansprüche 4 bis 6, dadurch gekennzeichnet, daß die Klammerhebel (14) unter der Wirkung einer in Richtung des Flansches (4) der Anschlußleitung (3) wirkenden Feder (21) durch Drehung der Klammerköpfe (13) in Richtung B verlängerbar sind.

8. Kupplung nach einem der Ansprüche 1 bis 7, dadurch gekennzeichnet, daß die Feder (21) in dem Zylinder (17) mit einer Federkraft, entgegen einer Kraftkomponente des Zylinders (17) bei Druckmittelbeaufschlagung desselben angeordnet ist.

9. Kupplung nach einem der Ansprüche 1 bis 8, dadurch gekennzeichnet, daß die Feder (21) außerhalb des Zylinders (17) mit einer Federkraft entgegen einer Kraftkomponente des Zylinders (17) bei Druckmittelbeaufschlagung desselben angeordnet ist.

10. Kupplung nach Anspruch 3 und 8, dadurch gekennzeichnet, daß der Klammerkopf (13) eine zweite Ausnehmung (22) axial benachbart zur ersten Ausnehmung (18) aufweist, in der die den Klammerkopf (13) gegen das freie Ende (26) des Klammerhebels (14) drückende Feder (21) angeordnet ist.

11. Kupplung nach einem der Ansprüche 1 bis 10, dadurch gekennzeichnet, daß die Klammerköpfe (13) mit dem Flansch (6) in Eingriff bringbare Nocken (25) aufweisen.

12. Kupplung nach einem der Ansprüche 1 bis 11, dadurch gekennzeichnet, daß als Feder (21) ein Tellerfederpaket vorgesehen ist.

Fig.1

0 285 813

Fig. 2

**Fig. 3**

**Fig. 4**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-3 617 075 (VAN HORN)<br>* Spalte 2, Zeilen 50-68; Figur 1 *<br>--- | 1 | F 16 L 37/12 |
| Y | GB-A-1 348 076 (MASAO YAMAZOE)<br>* Seite·1, Zeile 53 - Seite 2, Zeile 12; Figuren * | 1 | |
| A | | 2,5,9,<br>12 | |
| A | GB-A-1 604 826 (ASHLOW STEEL & ENGINEERING CO. LTD)<br>* Figuren *<br>--- | 1,11 | |
| A | NL-C- 89 511 (VAPOR HEATING CORP.)<br>* Figur 1 *<br>----- | 1 | |

| | RECHERCHIERTE SACHGEBIETE (Int. Cl.4) |
|---|---|
| | F 16 L |

Der vorliegende Recherchenbericht wurde für alle Patentansprüche erstellt

| Recherchenort | Abschlußdatum der Recherche | Prüfer |
|---|---|---|
| DEN HAAG | 07-06-1988 | HUBEAU M.G. |